# EUROPEAN PATENT SPECIFICATION

(11) **EP 3 016 023 B1**
(45) Date of publication and mention of the grant of the patent: **16.12.2020**
(21) Application number: 15191994.1
(22) Date of filing: 28.10.2015
(51) Int. Cl.: G06K 7/10

(54) **SCANNER WITH ILLUMINATION SYSTEM**
SCANNER MIT BELEUCHTUNGSSYSTEM
SCANNER AVEC SYSTÈME D'ÉCLAIRAGE

(30) Priority: 31.10.2014 CN 201420641034 U; 01.10.2015 US 201514872657
(43) Date of publication of application: 04.05.2016
(73) Proprietor: Honeywell International Inc., Morris Plains, NJ 07950 (US)
(72) Inventor: LU, Jun, Morris Plains, NJ 07950 (US); REN, Jie, Morris Plains, NJ 07950 (US); WANG, Zhuling, Morris Plains, NJ 07950 (US)
(74) Representative: Haseltine Lake Kempner LLP

(56) References cited:
- US-A1- 2007 215 706

## Description

### CROSS-REFERENCE TO RELATED APPLICATION

The present application claims the benefit of Chinese Utility Model Application No. 201420641034.4 titled *Scanner with lighting system* filed on October 31, 2014.

### TECHNICAL FIELD

The present disclosure generally relates to the technical field of automatic recognition, and more particularly to a scanner with an illumination system.

### BACKGROUND

Scanners are an instrument used for a commercial POS system, and comprise two main types: common scanners and commercial scanners. With the emergence of barcode technology, the use of labels, such as barcodes, in market circulation is a general trend. Under such a background, barcode scanners are widely used.

Common interface types of barcode scanners are SCSI (small computer standard interface), EPP (enhanced parallel port), USB (universal serial bus interface) and PS2 (keyboard interface), which can thus easily interconnect with a computer. In commercial applications, according to different working principles, barcode scanners are mainly classified into laser scanners and imaging scanners, and according to different usage methods, can further be classified into handheld barcode scanners, desktop scanners and embedded scanners, etc. In various scanners, scanners with great portability develop rapidly because of their characteristics, such as small size and convenient operation. In recent years, a variety of portable scanners with new concepts have appeared on the market, and the scanning effects thereof are outstanding, and the scanning speed is fast, thereby being welcomed by many users.

Patent document number US2007/215706A1 describes a digital image capture and processing system, and software development environment, that supports manufacturer-constrained system behavior modification and/or extension by end-users and third-parties through the development and installation/deployment of plug-in modules within the application layer of the system by persons other than the original system designers. The standard features and functionalities of such systems can be flexibly modified and/or extended by end-users and third-parties (e.g. VARs, OEMs etc), and thus satisfy customized end-user application requirements, without possessing or acquiring detailed knowledge about the hard-ware platform of the system, its communication interfaces with the outside environment, and user-related interfaces.

A slim-type image scanner is a portable scanner developed recently, which can be made very thin and is fashionable in appearance. Because of its excellent portability, the slim-type image scanner can be carried around by users. Such a scanner is not only suitable for scanning a label on paper, but also suitable for scanning a label on a screen of an electronic device, such as a laptop computer, a tablet computer, a notebook, a netbook or a smartphone. Particularly, with the rapid development of mobile communication technologies, using the slim-type image scanner to scan a barcode on a smart phone screen has become a technique commonly used by users, and is widely used in applications such as microblog and Wechat.

A traditional scanner has an imager and an illumination component, and when a barcode to be scanned is placed in front of the imager, the illumination component provides illumination needed by an imager barcode scanner, and the illuminated barcode can reflect the light emitted by the illumination component for the imager to perform receiving and decoding. Although such illumination enables the barcode to reflect light with sufficient intensity, when the barcode is on the screen of an electronic device (such as a cell phone), the case where brightness is too high will occur in the field of view of the imager because of specular reflection, i.e., a bright spot being produced in a barcode region, causing decoding failure.

During specular reflection, the light is reflected from a single incident direction to a single emitting direction, and the light intensity may be too strong, which is unfavorable for the imager when performing receiving and decoding. Diffusively reflected light is reflected at many angles, rather than only reflecting at a single angle like specular reflection. In general, the reflection of a barcode on paper is diffusive reflection, so that the imager can obtain an image signal with appropriate intensity for decoding. However, the reflection of the barcode on a screen of an electronic device, such as a cell phone, is specular reflection, and thus the imager will capture an unexpected specular reflection image, thereby being unable to correctly decode the image of the barcode.

Therefore, there is a need for a scanner that can effectively avoid such a situation of specular reflection.

### SUMMARY

According to the present invention there is provided a scanner and a corresponding scanning method according to independent claims 1 and 9. Preferred embodiments are defined in dependent claims 2-8 and 10-13.

An exemplary beneficial effect of the present disclosure is that the scanner effectively avoids specular reflection when scanning a barcode on a smartphone screen.

### BRIEF DESCRIPTION OF THE DRAWINGS

The present disclosure will be described below in conjunction with the following drawings. In each figure, similar reference numerals represent similar elements, and in the accompany drawings:
Fig. 1 shows a schematic diagram of a traditional scanner according to the related art;
Figs. 2A-2D show a scanner according to an exemplary embodiment of the present disclosure; and
Figs. 3A-3D show a scanner according to another exemplary embodiment of the present disclosure.

### DETAILED DESCRIPTION

In the following detailed description, the embodiments are described in sufficient detail so that a person skilled in the art can carry out the present disclosure. It should be understood that other embodiments can be used without departing from the scope of the present disclosure. Therefore, the following description should not be considered in a limiting sense.

The following detailed description is merely illustrative in essence, and is not intended to limit embodiments and the use of these embodiments. As used herein, the word "exemplary" means "serving as an example, instance, or illustration". Any embodiment described herein as "exemplary" is not necessarily to be construed as preferred or advantageous over other embodiments. In addition, it does not mean being confined by any explicit or implicit theory proposed in the foregoing technical field, background, summary, or the following detailed description.

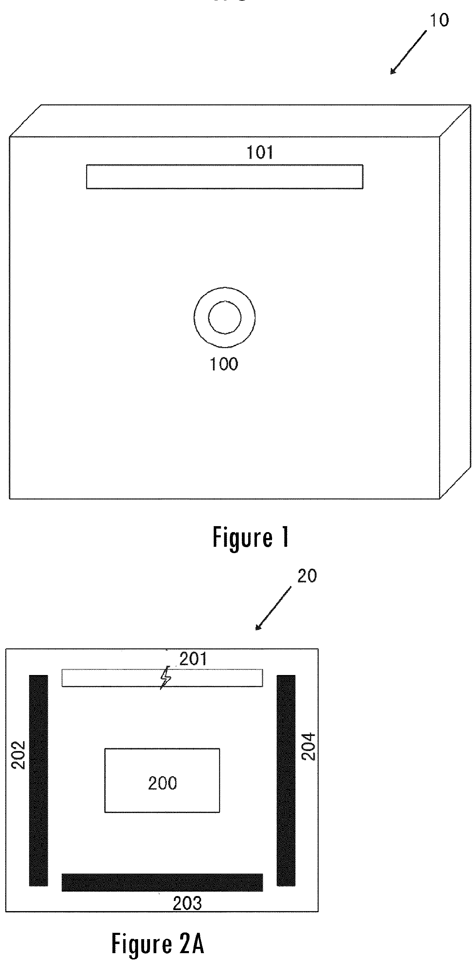

A traditional scanner is shown as Fig. 1. A scanner 10 may have an imager 100 and an illumination component 101, and the scanner 10 can be used for scanning a label, such as a barcode. When the barcode to be scanned is placed in front of the scanner 10, the illumination component 101 illuminates the barcode. The illuminated barcode can reflect the light irradiated by the illumination component for the imager 100 to perform receiving and decoding. Such illumination of the illumination component enables the barcode to reflect light with sufficient intensity, but in the case of a barcode on a smartphone screen, the barcode also typically causes the situation of excessive brightness (for example, a piece of floral white) to occur in the field of view of the imager 100. Thus, the imager 100 will capture an unexpected specular reflection image, thereby being unable to correctly decode the image of the barcode.

In order to solve such a specular reflection problem, an illumination component operating in a different mode is used in the scanner of the present disclosure. The scanner of the present disclosure is provided with a plurality of illumination components and avoids the occurrence of the specular reflection problem by controlling the illumination methods of the plurality of illumination components.

Referring to Figs. 2A-2D, which show a scanner 20 according to an exemplary embodiment of the present disclosure. The scanner 20 may be a slim-type barcode scanner based on a wide-angle lens imager. The scanner 20 may comprise an imager 200 and illumination devices (for example, illumination bars) 201-204, wherein in order to facilitate illustration, only four illumination devices are shown. It should be understood that the number of the illumination devices may not be limited to four. The illumination devices 201-204 may be arranged on an edge of each direction of the scanner 20, may be arranged uniformly, for example, being arranged in tetragonal N regular polygon, and may be far away from the imager 200 so as not to interfere with receiving an image signal thereby in illumination. In general, the imager 200 may be located at the center of the scanner 20. Alternatively, the scanner 20 may comprise a detector (not shown), which detects whether the intensity of light received from a label (taking a barcode as an example hereinafter) is higher than a predetermined threshold, i.e., judging whether specular reflection will occur.

When a barcode on a common paper material is scanned, and when the barcode is placed in front of the scanner 20, these illumination devices are generally opened. For example, when the detector detects the barcode, as shown in Fig. 2A, the illumination device 201 is opened, while the illumination devices 202-204 are closed; in an alternative embodiment, the illumination devices 201-204 can be opened simultaneously, or partially opened; and when there is a need to scan a barcode on a phone screen or other materials that can produce specular reflection, the detector will detect whether the intensity of light reflected from the barcode is higher than a predetermined threshold, i.e., whether specular reflection will occur, and if specular reflection occurs, an illumination status of the illumination device is changed, for example, when an illumination device is initially opened, closing the illumination device, or closing one or more of the illumination devices that are all initially opened, or controlling the illumination devices to successively open cyclic illumination.

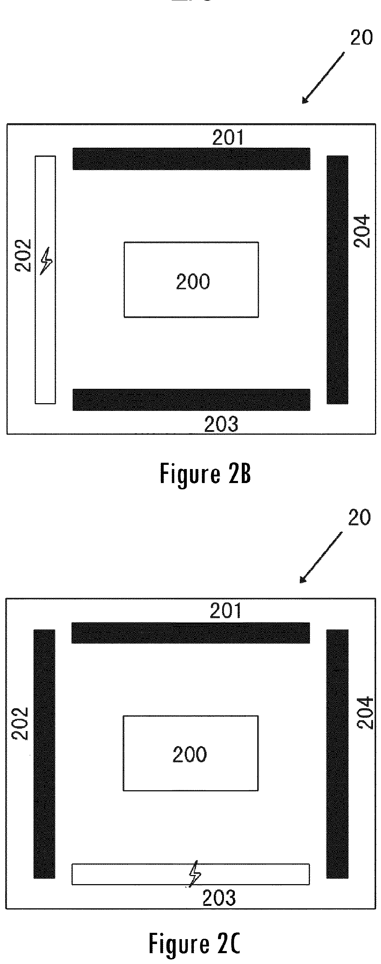

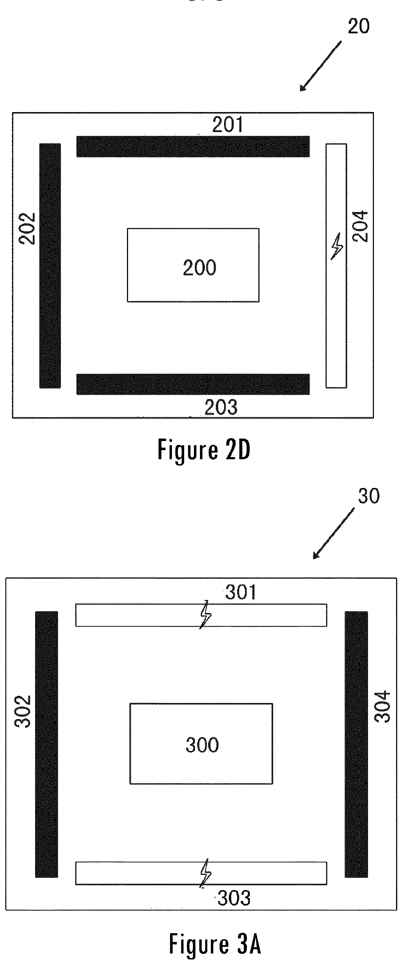

Fig. 2A is taken as an example, and when paper scanning is performed, the illumination device 201 is opened, while the illumination devices 202-204 are closed; and at this time, if specular reflection is detected when the barcode on the specular reflection material is scanned, the illumination device 201 can be directly closed. Or, as shown in Figs. 2A to 2D, controlling the illumination devices 201-204 to successively open illumination is described in detail as follows: at the beginning, only opening the illumination device 201, while closing the illumination devices 202-204;
after a predetermined time t (such as 0.01 second, 0.05 second), as shown in Fig. 2B, opening the illumination device 202, while closing the illumination devices 201, 203 and 204; and
after a predetermined time again, as shown in Fig. 2C, opening the illumination device 203, while closing the illumination devices 201, 202 and 204;
and so on, as shown in Fig. 2D, opening the illumination device 204, while closing the illumination devices 201-203.

Next, the illumination device 201 is opened again, while the illumination devices 202-204 are closed, and the cycle repeats in this way until information about the barcode is completely obtained by the imager 200.

Insofar as only one of the illumination devices 201-204 of the scanner 20 is opened once as stated above and they are all opened successively, it is possible to prevent the imager 200 from failing to appropriately perform receiving and decoding because of excessive illumination of specular reflection.

In the present embodiment, it may be that one illumination device is successively opened once, and it should be understood that it may also be that two or more of the illumination devices are opened successively.

Referring to Figs. 3A-3D, which show a scanner 30 according to another exemplary embodiment of the present disclosure. The scanner 30 may also be a slim-type barcode scanner based on a wide-angle lens imager. The scanner 30 may comprise an imager 300 and illumination devices (for example, illumination bars) 301-304, wherein in order to facilitate illustration, only four illumination devices are shown. It should be understood that the number of the illumination devices may not be limited to four. The illumination devices 301-304 may be arranged on an edge of each direction of the scanner 30, may be arranged uniformly, and may be far away from the imager 300 so as not to interfere with receiving an image signal thereby in illumination. In general, the imager 300 may be located at the center of the scanner 30. Alternatively, the scanner 30 may further comprise a detector (not shown), which detects whether the intensity of light received from a barcode is higher than a predetermined threshold.

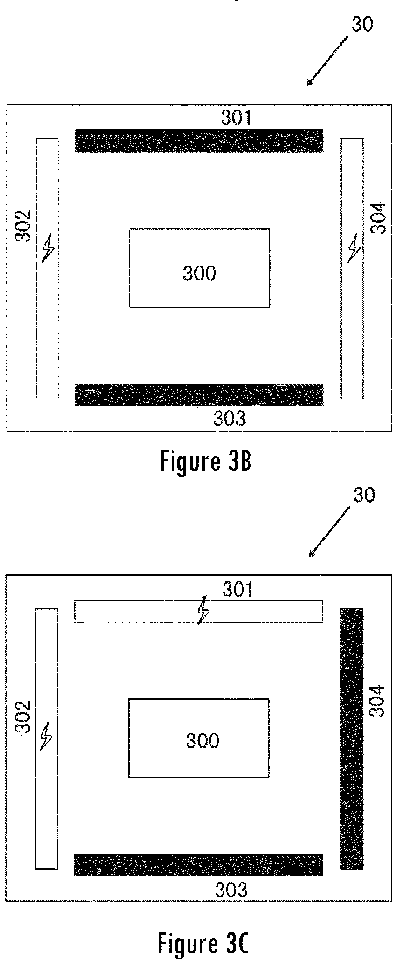

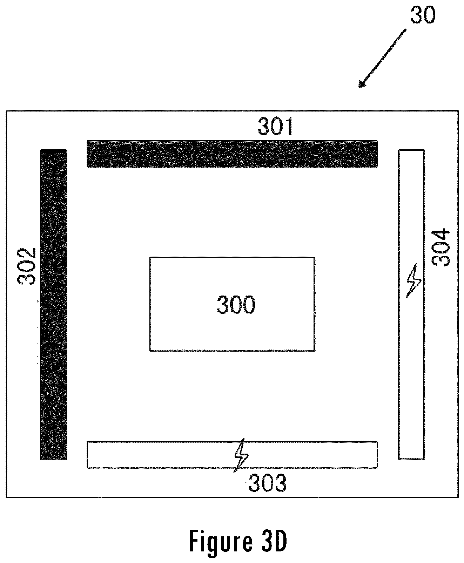

Fig. 3A is taken as an example, and when paper scanning is performed, the illumination devices 301 and 303 are opened, while the illumination devices 302 and 304 are closcd; at this time, if there is a need to scan a barcode on a specular reflection material, when the detector determines that the intensity of light reflected from the barcode is higher than the predetermined threshold, the illumination devices 301 and 303 can be directly completely closed or one of them is closed; or as shown in Fig. 3B, the illumination devices 301 and 303 are closed, while the additional illumination devices 302 and 304 are opened; or as shown in Fig. 3C, the illumination device 303 is closed, while the illumination device 302 is opened; or as shown in 3D, the illumination device 301 is closed, while the illumination device 304 is opened; specifically as follows:
as shown in Fig. 3A, at the beginning, opening the illumination devices 301 and 303, while closing the illumination devices 302 and 304, and when the detector determines that the intensity of light reflected from the barcode is higher than the predetermined threshold, after a predetermined time t' (such as 0.01 second, 0.05 second),
as shown in Fig. 3B, opening the illumination devices 302 and 304, while closing the illumination devices 301 and 303;
then as shown in Fig. 3C, opening the illumination devices 301 and 302, while closing the illumination devices 303 and 304;
and so on, finally, as shown in Fig. 3D, opening the illumination devices 303 and 304, while closing the illumination devices 301 and 302.

Next, the step of opening the illumination devices 301 and 303 while closing the illumination devices 302 and 304 is repeated, and the cycle repeats in this way until information about the barcode is completely obtained by the imager 300.

In the above-mentioned embodiment, it may be that the illumination devices are grouped in pairs to control different groups of illumination devices to emit light for performing a decoding attempt, and it should be understood that it may also be that three illumination devices are grouped into one group, and then different groups of illumination devices are controlled to provide different illumination methods for performing the decoding attempt.

In addition, if there are a greater number of illumination devices, a certain number of illumination devices can be directly opened once at a predetermined interval, for example, opening one at each moment every two or more illumination devices and so on as described above, or can successively open a certain number of illumination devices in a predetermined pattern.

The illumination devices (such as 301-304 shown) of the scanner 30 operate in this way, enabling the illumination method of irradiating on the barcode to constantly change, so that the position where reflection happens changes continuously, in which the successful decoding attempts can be performed.

In addition, as shown in Figs. 2A-2D and Figs. 3A-3D, a scanner 20 and a scanner 30 may be in a rectangular shape, but they are not limited to such a shape, and may further have any shapes that can be made relatively thin and fixed on a table board.

## Claims

1. A scanner, comprising:
a plurality of illumination devices (201-204) configured to illuminate a label;
an imager (200) configured to capture light reflected from the label and generate an image signal; and
a detector configured to detect an intensity of light reflected from the label;
wherein the scanner is configured to initially open one or more of the plurality of illumination devices (201-204), and capture light reflected from the label to decode the image signal;
**characterized in that** the scanner is further configured to, if the light intensity is higher than a predetermined threshold, change an illumination status of one or more of the plurality of illumination devices (201-204);
wherein the change in the illumination status comprises controlling the plurality of illumination devices to successively open cyclically such that a position where light is reflected from the label changes continuously.

2. The scanner of claim 1, wherein changing the illumination status of one or more of the plurality of illumination devices opens and closes one illumination device once in the plurality of illumination devices and successively opens and closes the same illumination device.

3. The scanner of claim 1, wherein changing the illumination status of one or more of the plurality of illumination devices opens and closes multiple illumination devices once in the plurality of illumination devices and successively opens and closes the same illumination devices in a predetermined pattern.

4. The scanner of claim 1, wherein changing the illumination status of one or more of the plurality of illumination devices opens and closes multiple of the plurality of illumination devices once at a predetermined interval and successively opens and closes the same illumination devices.

5. The scanner of claim 1, wherein the imager comprises a wide-angle lens.

6. The scanner of claim 1, wherein the plurality of illumination devices are uniformly distributed on an edge of the scanner.

7. The scanner of claim 1, wherein the plurality of illumination devices are illumination bars.

8. The scanner of claim 1, wherein the scanner is configured to decode a barcode on the label.

9. A method, comprising:
illuminating, with one or more illumination devices (201-204), a label, the one or more illumination devices being of a plurality of illumination devices of a scanner;
capturing, with an imager (200) of the scanner, light reflected from the label and generating an image signal;
detecting, with the scanner, an intensity of light reflected from the label;
initially opening one or more of the of the plurality of illumination devices (201-204) and capturing light reflected from the label to decode the image signal; **characterized in that**
if the detected intensity of light is higher than a predetermined threshold, changing an illumination status of one or more of the plurality of illumination devices (201-204);
wherein the change in the illumination status comprises controlling the plurality of illumination devices to successively open cyclically such that a position where light is reflected from the label changes continuously.

10. The method of claim 9, wherein changing the illumination status of one or more of the plurality of illumination devices opens and closes one illumination device once in the plurality of illumination devices and successively opens and closes the same illumination device.

11. The method of claim 9, wherein changing the illumination status of one or more of the plurality of illumination devices opens and closes multiple illumination devices once in the plurality of illumination devices and successively opens and closes the same illumination devices in a predetermined pattern.

12. The method of claim 9, wherein changing the illumination status of one or more of the plurality of illumination devices opens and closes multiple of the plurality of illumination devices once at a predetermined interval and successively opens and closes the same illumination devices.

13. The method of claim 9, wherein the imager comprises a wide-angle lens.

## Patentansprüche

1. Scanner, umfassend:
eine Mehrzahl von Beleuchtungsvorrichtungen (201-204), die konfiguriert sind, um ein Etikett zu beleuchten;
einen Bildgenerator (200), der konfiguriert ist, um vom Etikett reflektiertes Licht zu erfassen und ein Bildsignal zu erzeugen; und
einen Detektor, der konfiguriert ist, um eine vom Etikett reflektierte Lichtintensität zu detektieren;
wobei der Scanner konfiguriert ist, um anfänglich eine oder mehrere der Mehrzahl von Beleuchtungsvorrichtungen (201-204) zu öffnen und vom Etikett reflektiertes Licht zu erfassen, um das Bildsignal zu decodieren;
**dadurch gekennzeichnet, dass** der Scanner ferner konfiguriert ist, um dann, wenn die Lichtintensität höher als ein vorbestimmter Schwellenwert ist, einen Beleuchtungsstatus einer oder mehrerer der Mehrzahl von Beleuchtungsvorrichtungen (201-204) zu ändern;
wobei die Änderung des Beleuchtungsstatus das Steuern der Mehrzahl von Beleuchtungsvorrichtungen umfasst, um sich nacheinander zyklisch zu öffnen, sodass sich eine Position, an der Licht vom Etikett reflektiert wird, kontinuierlich ändert.

2. Scanner nach Anspruch 1, wobei das Ändern des Beleuchtungsstatus einer oder mehrerer der Mehrzahl von Beleuchtungsvorrichtungen eine Beleuchtungsvorrichtung einmal in der Mehrzahl von Beleuchtungsvorrichtungen öffnet und schließt, und nacheinander dieselbe Beleuchtungsvorrichtung öffnet und schließt.

3. Scanner nach Anspruch 1, wobei das Ändern des Beleuchtungsstatus einer oder mehrerer der Mehrzahl von Beleuchtungsvorrichtungen mehrere Beleuchtungsvorrichtungen einmal in der Mehrzahl von Beleuchtungsvorrichtungen öffnet und schließt, und nacheinander dieselben Beleuchtungsvorrichtungen in einem vorbestimmten Muster öffnet und schließt.

4. Scanner nach Anspruch 1, wobei das Ändern des Beleuchtungsstatus einer oder mehrerer der Mehrzahl von Beleuchtungsvorrichtungen mehrere der Mehrzahl von Beleuchtungsvorrichtungen einmal in einem vorbestimmten Intervall öffnet und schließt, und nacheinander dieselben Beleuchtungsvorrichtungen öffnet und schließt.

5. Scanner nach Anspruch 1, wobei der Bildgenerator ein Weitwinkelobjektiv umfasst.

6. Scanner nach Anspruch 1, wobei die Mehrzahl von Beleuchtungsvorrichtungen gleichmäßig auf einer Kante des Scanners verteilt ist.

7. Scanner nach Anspruch 1, wobei die Mehrzahl von Beleuchtungsvorrichtungen Beleuchtungsstäbe sind.

8. Scanner nach Anspruch 1, wobei der Scanner konfiguriert ist, um einen Barcode auf dem Etikett zu decodieren.

9. Verfahren, umfassend:
Beleuchten eines Etiketts mit einer oder mehreren Beleuchtungsvorrichtungen (201-204), wobei die eine oder mehreren Beleuchtungsvorrichtungen aus einer Mehrzahl von Beleuchtungsvorrichtungen eines Scanners bestehen;
Erfassen von vom Etikett reflektiertem Licht mit einem Bildgenerator (200) des Scanners und Erzeugen eines Bildsignals;
Detektieren einer vom Etikett reflektierten Lichtintensität mit dem Scanner;
anfängliches Öffnen einer oder mehrerer der Mehrzahl von Beleuchtungsvorrichtungen (201-204) und Erfassen von vom Etikett reflektiertem Licht, um das Bildsignal zu decodieren; **dadurch gekennzeichnet, dass**
wenn die detektierte Lichtintensität höher als ein vorbestimmter Schwellenwert ist, ein Ändern eines Beleuchtungsstatus einer oder mehrerer der Mehrzahl von Beleuchtungsvorrichtungen (201-204) erfolgt;
wobei die Änderung des Beleuchtungsstatus das Steuern der Mehrzahl von Beleuchtungsvorrichtungen umfasst, um sich nacheinander zyklisch zu öffnen, sodass sich eine Position, an der Licht vom Etikett reflektiert wird, kontinuierlich ändert.

10. Verfahren nach Anspruch 9, wobei das Ändern des Beleuchtungsstatus einer oder mehrerer der Mehrzahl von Beleuchtungsvorrichtungen eine Beleuchtungsvorrichtung einmal in der Mehrzahl von Beleuchtungsvorrichtungen öffnet und schließt, und nacheinander dieselbe Beleuchtungsvorrichtung öffnet und schließt.

11. Verfahren nach Anspruch 9, wobei das Ändern des Beleuchtungsstatus einer oder mehrerer der Mehrzahl von Beleuchtungsvorrichtungen mehrere Beleuchtungsvorrichtungen einmal in der Mehrzahl von Beleuchtungsvorrichtungen öffnet und schließt, und nacheinander dieselben Beleuchtungsvorrichtungen in einem vorbestimmten Muster öffnet und schließt.

12. Verfahren nach Anspruch 9, wobei das Ändern des Beleuchtungsstatus einer oder mehrerer der Mehrzahl von Beleuchtungsvorrichtungen mehrere der Mehrzahl von Beleuchtungsvorrichtungen einmal in einem vorbestimmten Intervall öffnet und schließt, und nacheinander dieselben Beleuchtungsvorrichtungen öffnet und schließt.

13. Verfahren nach Anspruch 9, wobei der Bildgenerator ein Weitwinkelobjektiv umfasst.

## Revendications

1. Scanner comprenant :
une pluralité de dispositifs d'éclairage (201-204) configurés pour éclairer une étiquette ;
un imageur (200) configuré pour capter la lumière réfléchie par l'étiquette et générer un signal d'image ; et
un détecteur configuré pour détecter une intensité de lumière réfléchie par l'étiquette ;
le scanner étant configuré pour ouvrir initialement un ou plusieurs dispositifs de la pluralité de dispositifs d'éclairage (201-204), et pour capter la lumière réfléchie par l'étiquette afin de décoder le signal d'image ;
**caractérisé en ce que** le scanner est en outre configuré pour, si l'intensité de lumière est supérieure à un seuil prédéterminé, changer un état d'éclairage d'un ou plusieurs dispositifs de la pluralité de dispositifs d'éclairage (201-204) ;
le changement de l'état d'éclairage comprenant la commande de la pluralité de dispositifs d'éclairage pour qu'ils s'ouvrent successivement de manière cyclique, de sorte qu'une position où la lumière est réfléchie par l'étiquette change continuellement.

2. Scanner selon la revendication 1, dans lequel le changement de l'état d'éclairage d'un ou plusieurs dispositifs de la pluralité de dispositifs d'éclairage ouvre et ferme un dispositif d'éclairage une fois parmi la pluralité de dispositifs d'éclairage et ouvre et ferme successivement le même dispositif d'éclairage.

3. Scanner selon la revendication 1, dans lequel le changement de l'état d'éclairage d'un ou plusieurs dispositifs de la pluralité de dispositifs d'éclairage ouvre et ferme plusieurs dispositifs d'éclairage une fois dans la pluralité de dispositifs d'éclairage et ouvre et ferme successivement les mêmes dispositifs d'éclairage selon un modèle prédéterminé.

4. Scanner selon la revendication 1, dans lequel le changement de l'état d'éclairage d'un ou plusieurs dispositifs de la pluralité de dispositifs d'éclairage ouvre et ferme plusieurs dispositifs de la pluralité de dispositifs d'éclairage une fois à un intervalle prédéterminé et ouvre et ferme successivement les mêmes dispositifs d'éclairage.

5. Scanner selon la revendication 1, dans lequel l'imageur comprend un objectif grand angle.

6. Scanner selon la revendication 1, dans lequel la pluralité de dispositifs d'éclairage sont uniformément répartis sur un bord du scanner.

7. Scanner selon la revendication 1, dans lequel la pluralité de dispositifs d'éclairage sont des barres d'éclairage.

8. Scanner selon la revendication 1, dans lequel le scanner est configuré pour décoder un code à barres sur l'étiquette.

9. Procédé comprenant :
l'éclairage, avec un ou plusieurs dispositifs d'éclairage (201-204), d'une étiquette, le ou les dispositifs d'éclairage faisant partie d'une pluralité de dispositifs d'éclairage d'un scanner;
le captage, à l'aide d'un imageur (200) du scanner, de la lumière réfléchie par l'étiquette et la génération d'un signal d'image ;
la détection, avec le scanner, d'une intensité de lumière réfléchie par l'étiquette ;
en ouvrant initialement un ou plusieurs dispositifs de la pluralité des dispositifs d'éclairage (201-204) et en captant la lumière réfléchie par l'étiquette pour décoder le signal d'image ; **caractérisé en ce que**
si l'intensité de lumière détectée est supérieure à un seuil prédéterminé, modifier l'état d'éclairage d'un ou plusieurs dispositifs de la pluralité de dispositifs d'éclairage (201-204) ;
dans lequel le changement de l'état d'éclairage comprend la commande de la pluralité de dispositifs d'éclairage pour qu'ils s'ouvrent successivement de manière cyclique, de sorte qu'une position où la lumière est réfléchie par l'étiquette change continuellement.

10. Procédé selon la revendication 9, dans lequel le changement de l'état d'éclairage d'un ou plusieurs dispositifs de la pluralité de dispositifs d'éclairage ouvre et ferme un dispositif d'éclairage une fois dans la pluralité de dispositifs d'éclairage et ouvre et ferme successivement le même dispositif d'éclairage.

11. Procédé selon la revendication 9, dans lequel le changement de l'état d'éclairage d'un ou plusieurs dispositifs de la pluralité de dispositifs d'éclairage ouvre et ferme plusieurs dispositifs d'éclairage une fois dans la pluralité de dispositifs d'éclairage et ouvre et ferme successivement les mêmes dispositifs d'éclairage selon un modèle prédéterminé.

12. Procédé selon la revendication 9, dans lequel le changement de l'état d'éclairage d'un ou plusieurs dispositifs de la pluralité de dispositifs d'éclairage ouvre et ferme plusieurs dispositifs de la pluralité de dispositifs d'éclairage une fois à un intervalle prédéterminé et ouvre et ferme successivement les mêmes dispositifs d'éclairage.

13. Procédé selon la revendication 9, dans lequel l'imageur comprend un objectif grand angle.
